# EUROPEAN PATENT APPLICATION

(11) **EP 2 248 637 A1**
(43) Date of publication of application: **10.11.2010**
(21) Application number: 09159811.0
(22) Date of filing: 08.05.2009
(51) Int. Cl.: B26B 29/06, B26B 3/00, B26B 9/00, A47J 47/00

(54) **Assembly for manually cutting foodstuffs**

(71) Applicant: Qualicasa B.V., 9351 VC Leek (NL)
(72) Inventor: Herman, Freek Arie, 9351 TT Leek (NL); Herman-Wouters, Martine Marie Yvonne, 9351 TT Leek (NL)
(74) Representative: Peters, Sebastian Martinus

(57) **Abstract**

Assembly for manually cutting of foodstuff, in particular bread and cake, comprising a board (1) for providing a surface (2) for supporting said foodstuff, a knife (6) for cutting the foodstuff, and a single upright (3) comprising a slot (5) for guiding the knife, wherein the upright is positioned at or near a first edge (4) of the board, wherein the slot extends substantially perpendicular to the first edge and to the surface of the board, for guiding a to and fro movement of the knife in a direction perpendicular to the first edge, wherein the knife is arranged to extend over the board, wherein only a part of the knife at or near the distal end (18) of the knife is guided by the slot, and wherein the proximal end of the knife is provided with a handle (15).

## Description

### BACKGROUND

The invention relates to an assembly for manually cutting of foodstuffs, in particular for the cutting of bread, cake, vegetables and meat.

In the prior art, several embodiments of devices for manually cutting of foodstuffs are known.

For example GB 206,009 discloses a device comprising a platform for supporting bread and the like, whereby the platform having at its front end two upright members or posts that are slotted or otherwise arranged to serve as guides for a cutting knife that is provided with a handle at one end and is free to move to and fro within the guides in directions longitudinal of the length of the knife and also up en down, and parallel with the front end. The foodstuff to be cut needs to be positioned between the two upright members and the cutting knife is on both sides of the foodstuff guided.

A similar arrangement is known from US 53,835 and BE 454,437.

It is, inter alia, an object of the present invention to provide a assembly for manually cutting of foodstuff using the well known to and fro movement of the knife, wherein the foodstuff no longer has to be placed between guiding members for the knife.

### SUMMARY OF THE INVENTION

According to a first aspect, the invention provides an assembly for manually cutting of foodstuff comprising:
a board for providing a surface for supporting said foodstuff,
a knife for cutting the foodstuff, and
a single upright comprising a slot for guiding the knife, wherein the upright is positioned at or near a first edge of the board, wherein the slot extends substantially perpendicular to the first edge and to the surface of the board, for guiding a to and fro movement of the knife in a direction perpendicular to the first edge,
wherein the knife is arranged to extend over the board, wherein only a part of the knife at or near the distal end of the knife is guided by the slot, and wherein the proximal end of the knife is provided with a handle.

Because the single upright with the guiding means for the knife are arranged at or near said first side only, a second side of the board opposite the first side can be without obstacles. At said second side of the board there is no longer a further upright present between the foodstuff to be cut and the user. Thus the foodstuff no longer has to be placed between guiding members for the knife, and the absence of obstacles such as an upright at the second side of the board provides easy and convenient handling of the foodstuff by the user.

In an embodiment the upright comprises a front and a rear, wherein the rear spaced apart from the front in a direction substantially perpendicular to the first side or edge, wherein the slot is a first slot provided in the front, wherein the rear is provided with a second slot respectively, both first and second slots providing a through-opening, wherein the second slot is substantially parallel to the first slot for accommodating and/or guiding the knife running through the first slot and the second slot.

Due to the distance between the first slot and the second slot, the upright essentially provides a first and second guiding part in the through-opening, which first and second guiding parts are arranged at a distance to provide a straight and stable guiding of the knife. The first and second guiding parts are both arranged on the same side of the board, and in particular on the same side of the foodstuff to be cut. The distance between the front and rear can be relatively small, for example smaller than 10 cm, preferably smaller than 8 cm, preferably smaller than 6 cm. Preferably the distance between the front and rear is larger than 2 cm, preferably larger than 4 cm. Thus the upright for guiding the knife only requires a small area of the worktop, preferably smaller than the width of the foodstuff like bread or cake. In this embodiment the single upright with guiding means is arranged for effectively confining the knife in the guiding direction of the to and fro reciprocating movement of the knife, in particular for holding the knife in a plane substantially perpendicular to the plane of the board. Due to this confinement, the knife is more stably supported at its distal end only such that it requires no further support or guiding means at the second side of the board.

In an embodiment the upright comprises a front and a rear, wherein the rear spaced apart from the front in a direction substantially perpendicular to the first side or edge, wherein the slot is a first slot provided in a first guiding body which is attached to or near the front, wherein a second guiding body which is provided with a second slot is attached to or near the rear respectively, both first and second slots providing a through-opening, wherein the second slot is substantially parallel to the first slot for accommodating and/or guiding the knife running through the first slot and the second slot. Using a first and second guiding body provides the option to utilize different materials for the front and rear on the one hand and the guiding bodies on the other hand.

In an embodiment, the first and/or second guiding bodies are made from a polymer material. Such polymer material can strongly reduce noise which may arise during the to and fro movement of the knife through the slots.

In an embodiment the first and/or second guiding bodies are made from a low friction material, such as Polyoxymethylene (POM), for providing a smooth guiding of the to and fro movement of the knife.

In an embodiment the guiding bodies are removable arranged to or near the front and rear. In this embodiment the guiding bodies may be exchanged or replaced whenever they are worn out or damaged.

In an embodiment the front and rear are made from a construction material, such as stainless steel.

In an embodiment, the board is provided with an upstanding wall at or near the first side of the board for placing the foodstuff to be cut against. In an embodiment, the wall extends in the length direction of the first side, and in particular parallel to the first side. The knife extends substantially perpendicular to said wall such that slices can be cut from the foodstuff in a direction substantially perpendicular to a side of the foodstuff that abuts said wall.

In an embodiment, said wall comprises a through-opening for the knife near the front-side of the upright, wherein said through-opening extend substantially parallel to the slot. This embodiment may be obtained by arranging two walls on either side of the upright, or by one wall which is provided with a U-shaped, substantially vertical extending, through-opening for the knife.

In an embodiment the wall and the front side of the upright can be formed as one single piece. In an embodiment the front side is arranged in the plane of the wall for placing the foodstuff against.

Alternatively, in an embodiment, the upright is arranged at a side of the wall remote from the plane of the wall for placing the foodstuff against. In an embodiment the wall is arranged between the upright and the foodstuff to be cut.

In an embodiment, said slot is substantially arranged at or near the centre of the first side of the board. Due to this essentially symmetrical arrangement of the slot and therefore also of the knife with respect to the board, the assembly can be used by right handed as well as left handed users.

In an embodiment, the distal end is, at least partially, lacking a cutting edge, in particular that part of the knife that during the to and fro movement of the knife immerges from the side of the upright facing away from the board. Thus the cutting action is substantially restricted to the area above the board.

In an embodiment, the distal end of the knife is provided with a notch, wherein the notch is larger than the width of the slot. The notch prevents that the knife is pulled out of the slot during the to and fro movement of the knife during cutting.

In an embodiment, the slot is at a side facing away from the board, provided with a slot part having an enlarged width for allowing the notch to pass.

According to a further aspect, the invention provides an upright to guide a knife for manually cutting foodstuff, wherein the upright comprises a front, a rear spaced apart from the front, and side walls interconnecting the front and the rear, wherein the front and the rear are provided with a first slot and a second slot both having a through-opening, the first slot and the second slot extending in the longitudinal direction of at least part of the upright, wherein the first slot is substantially parallel to the second slot for accommodating and/or guiding the knife running through the first slot and the second slot. The foodstuff to be cut by a knife guided by the upright is to be located in front of the upright. Since the upright construction comprises two slots for accommodating and running through the knife, the construction provides straightly and stably guiding the knife, even though the construction of the upright may be small in the reciprocating cutting direction of the knife. The small dimension of the upright is advantageous in a kitchen-like environment wherein many cooking relating activities take place each occupying an area upon the sink or an alternative worktop.

In an embodiment, the front, the rear and the side walls form a tube with a longitudinal axis, wherein the first and second slot are substantially parallel to the longitudinal axis. Since the tube incorporates a front, a rear and side walls, the upright allows to be manufactured by one piece of a standard construction material.

In an embodiment, the distance between the first slot and the second slot is larger than the width of the first slot and the second slot. The longer the distance between the first slot and the second slot, the more straight and stable the knife is guiding by these slots. The distance can be relatively small, for example, smaller than the width of the foodstuff, and thus, the upright to guide a knife claims a smaller area of the sink or an alternative worktop.

In an embodiment, the first slot is arranged in a first guiding body which is attached to or near the front and/or wherein the second slot is arranged in a second guiding body which is fixed to or near the rear. In an other embodiment, the first and/or second guiding body comprises a different material than the front and/or the rear, preferably wherein said material is a polymer, preferably polyoxymethylene (POM). It is likely the upright is made from a construction material like a stainless steel. This material however would cause a certain amount of friction when the knife, which is preferably also made from stainless steel, is running through the upright. In order to achieve smoothly guiding the knife, the first slot and the second slot may be provided with a first guiding body and a second guiding body respectively wherein both the first guiding body and the second guiding body are capable to guide the knife smoothly, preferably in the case where the guiding bodies are made from low friction materials, such as polyoxymethylene (POM). To distinguish the guiding bodies from the upright construction, these guiding bodies may be exchanged or replaced whenever these guiding bodies are worn out or damaged.

In an embodiment, the front is arranged such that the foodstuff can be placed in front of the front and the rear is situated behind the front. From the position of the operator of the knife, the upright is usually placed behind the foodstuff. Thus, there is no obstruction between the operator and the foodstuff and therefore, the upright to guide a knife claims a smaller area of the sink or an alternative worktop.

According to a third aspect the invention provides an assembly comprising an upright according to these previous embodiments and a knife for running through the upright, which knife comprises a handle and a projection, wherein the upright is situated between the handle and the projection. The projection limits the movement of the knife, in particular it prevents the knife from escaping the second slot of the upright during a backward movement of the reciprocating cutting movement. Since the second slot of the upright is narrower than the size of the projection, a continued backward movement of the knife will result in a collision of the projection against the side of the rear situated opposite the front of the upright. Thus, the projection guarantees the knife being guided by the first and the second slot during cutting the foodstuff.

In an embodiment, the first and the second slot have a larger width at or near an upper side of the slot and/or the upright, wherein the width extends over a small length in the longitudinal direction of the upright. The larger width of the first and the second slot allows a knife comprising a projection being inserted through the upright for usage. In order to insert the knife through the first slot and the second slot, the projection needs to be positioned firstly in front of the larger width of the first slot, and, after the projection being run through the first slot, to be positioned secondly in front of the larger width of the second slot, subsequently the projection can be run through the second slot as well. Since the larger width in the first and in the second slot is substantially located in an upper position of the upright, the knife must be run through the first and the second slot in an upper position as well, wherein the knife is to be positioned above the foodstuff to be cut. In other words, this construction allows to firstly position the foodstuff to be cut and secondly to insert the knife into the upright.

In an other embodiment, the larger width of the first and the second slot is substantially rectangular extending through the slots parallel to the reciprocating cutting direction. According to this way, the larger width of the first slot is in alignment with the larger width of the second slot and allows any projection having any shape being inserted through these larger widths as long as the size of the projection is smaller than the cross section of the larger widths.

In an embodiment, the upright is part of an assembly comprising a support element attached to and/or coupled with the upright. The support element provides the upright being properly installed at a fixed position within a kitchen like environment.

In an embodiment, the upright is part of an assembly comprising a support element, wherein the support element is a board comprising a surface to support the foodstuff. The support element provides the upright being properly installed within a kitchen like environment, however, the board is not restricted to a fixed position, but rather, it is to be fixed at a flexible position.

In an embodiment, the upright is part of an assembly comprising a support element, wherein the upright comprises a first coupling means attached to a bottom side of the upright to engage with a second coupling means attached to the upper side of the support element for firmly attaching the upright to the support element. The interacting coupling means provide the upright to be installed on the support element to cut foodstuff and to remove it again after finishing cutting the foodstuff. In this embodiment, the support may also be placed and/or attached to a worktop.

In an embodiment, the first coupling means and the second coupling means form a bayonet type coupling. In order to install and remove the upright quickly and with ease, the coupling means require to couple and uncouple by a simple manual action without the need to use a tool or the like. A bayonet type coupling, wherein for example, provides such a coupling and uncoupling.

In an embodiment, the upright is part of an assembly comprising a support element, wherein the support element comprises an insert to be placed substantially in or adjacent to a board or worktop, wherein the upright is movable between a first position wherein the upright projects out of the insert, and a second position wherein the upright is stored in a recess of the insert. In the first position of the upright, it may be used to guide a knife for cutting foodstuff. After finishing cutting the foodstuff, the upright may be moved from the first position to the second position, wherein the upright is not to be used, but rather wherein it is to be stored temporarily in a recess underneath the worktop. For bringing the upright from the first to the second position, the support element comprises an insert providing a base to a mechanism to move the upright from the first to the second position.

In an other embodiment, the upright is part of an assembly comprising a support element, wherein the support element comprises a board, wherein the upright is movable between a first position wherein the upright projects out of the board, and a second position wherein the upright is stored in a position, wherein the upright is not to be used, but rather wherein it is to be stored temporarily in a position substantially parallel to the plane of the board. For bringing the upright from the first to the second position, the support element comprises a base for a mechanism to move the upright from the first to the second position, for example on top of the board or via an insert in the board.

In an other embodiment, the recess comprises an opening surface for moving the upright into and out of the recess, which opening surface is substantially situated parallel to and/or below a plane through the upper side of the support element. When storing the upright in the recess locating just under a top surface of the support element allows the support element or alternative worktop to provide a free area to perform other kitchen like activities.

In an other embodiment, the upright is attached to the support element so as to hinge. The hinging upright allows to be rotated from a first position wherein the upright is substantially vertical, to a second position wherein the upright is substantially horizontal and parallel to the surface of the support element. When storing the upright in a substantial horizontal position, the recess to enclose the upright claims a substantial horizontal space as well, which contributes to an efficient space claiming layout of the kitchen like environment.

Various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will now be further explained with reference to the enclosed exemplary embodiments as shown in the attached drawings:
Figure 1 shows a schematic top-view of an exemplary embodiment according to the invention;
Figuur 2 shows a side elevation view in the direction II of figure 1;
Figuur 3 shows a side elevation view in the direction III of figure 1;
Figure 4 shows a front view of an upright according to an embodiment of an upright to guide a knife for manually cutting foodstuff;
Figure 5 shows a cross section according to line II-II of figure 4 comprising an upright to guide a knife for manually cutting foodstuff;
Figure 6 shows a cross section of an upright according to line III-III in figure 5 which upright is installed upon a board or a worktop and wherein a knife is run through the upright;
Figure 7 shows an exploded view of an upright according to figure 6 and a support element comprising an insert;
Figure 8 shows an exploded view of an upright and a support element comprising an insert according to line V-V in figure 7;
Figure 9A shows a side view of an assembly comprising an insert and an upright installed in a first position and stored in a second position;
Figure 9B shows a front view of an assembly according to figure 9A wherein the upright is stored in the second position;
Figure 9C shows a top view of an assembly according to figure 9A wherein the upright is stored in the second position;
Figures 10A - 10C show a schematic view of an exemplary embodiment where the upright is hingedly attached to the board;
Figure 11 shows an exemplary embodiment having a groove or trench along the wall for collecting crumbs; and
Figure 12 shows an exemplary embodiment where the wall is part of the upright.

### DETAILED DESCRIPTION OF THE DRAWINGS

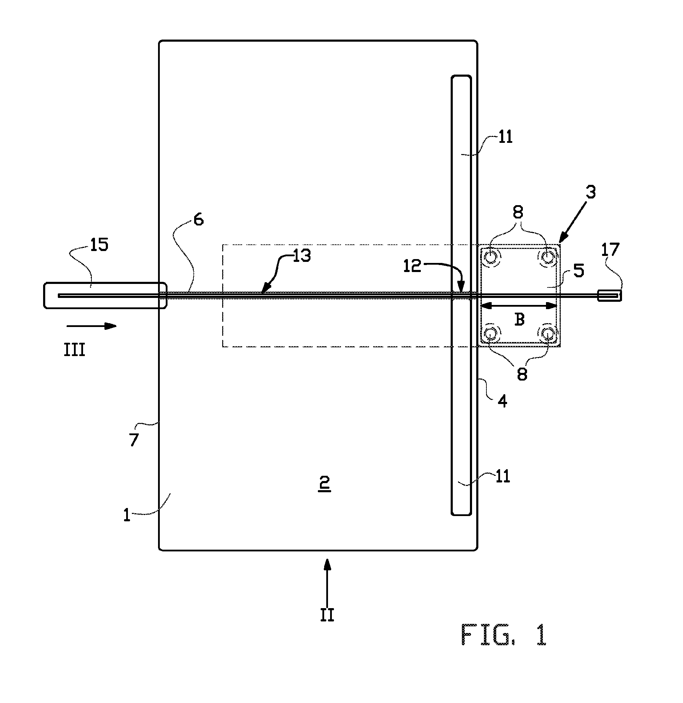

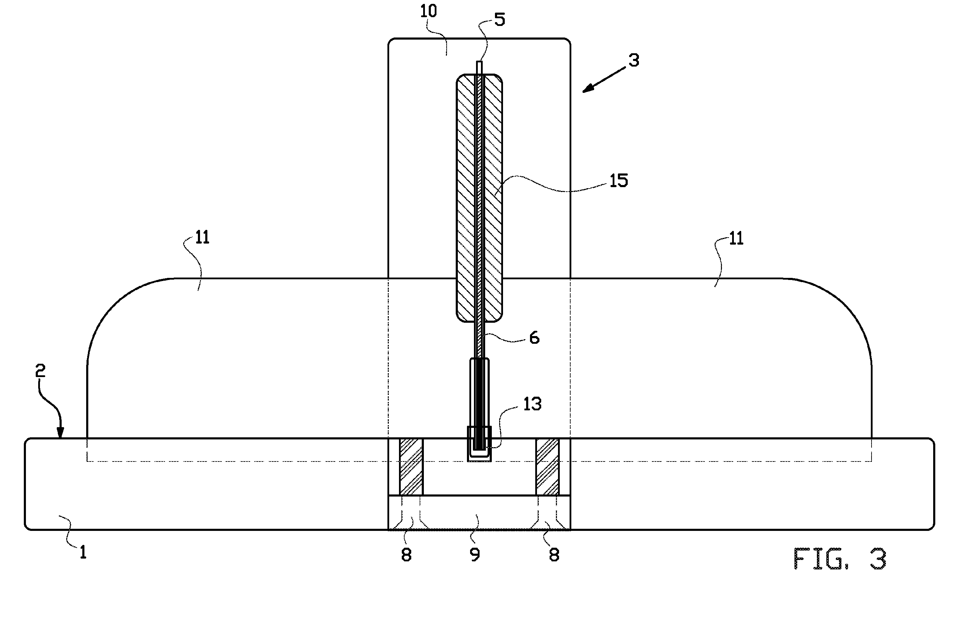

Figure 1 shows a schematic top-view of a first embodiment of the invention, called a "hotel-slicer", for manually cutting foodstuff, such as bread or cake. This exemplary embodiment comprises a board 1 having a surface 2 for supporting the foodstuff. Furthermore, the assembly is provided with a single guiding member 3, which extends in a direction substantially perpendicular to the surface 2. Said guiding member 3 is placed at a first edge 4 of the board 1, in particular substantially in the centre of this first edge 4, as shown in figures 1 and 3. The guiding member 4 comprises a vertical extending block having a substantially rectangular cross-section, which extend over a distance B from said first edge 4 of the board 1.

In the guiding member 3, a slot shaped throug-opening 5 is provided. The assembly is further provided with a knife 6, wherein the blade of the knife 6 passes through the slot 5, at least the distal end 18 of the knife 6. The slot is arranged in order to let the blade of the knife 6 pass with a small amount of play, such that the blade of the knife 6 can be moved in a to and fro reciprocating cutting movement. The length of the slot B is such that the knife 6 is kept in a position substantially perpendicular to the first edge 4 of the board 1. This is in particular effective in combination with a knife 6 having a substantially rigid blade or a blade having only a slight flexibility.

As shown in the figures 1, 2 and 3 the second edge 7 opposite the first edge 4 is without obstructions. The handle 15 of the knife 6 is arranged near this second edge 7. A user positioned near the second edge 7 can use the assembly and may operate the knife 6 and hold and manipulate the foodstuff on the board, without any hindrance of obstructions between the user and the foodstuff.

The guiding member 3 is fixed to a bottom plate 9 by means of a screw connection 8. The bottom plate 9 is accommodated in a recess at the bottom side of the board 1. In an alternative embodiment, the guiding member 3 can directly connected to the board 1.

The slot 5 is closed at a top end 10 of the guiding member 3 for limiting the movement of the knife 6 in vertical direction.

Near the first edge 4 of the board, a wall 11 is provided. This wall 11 provides a stop plate for placing the foodstuff against said wall 11 to position the foodstuff for cutting. The wall 11 is near the guiding member 3 provided with a through-opening 12 for letting the knife 6 pass towards the guiding member 3. The through-opening 12 of the wall 11 is substantially arranged in the same plane as the slot 5 of the guiding member 3

Furthermore, the board is provided with a groove 13, which is also substantially arranged in the same plane as the slot 5. The groove 13 can accommodate the cutting edge 2 of the knife 6, such that the cutting edge 2 can reach below the supporting surface 2 of the board in order to fully cut the foodstuff.

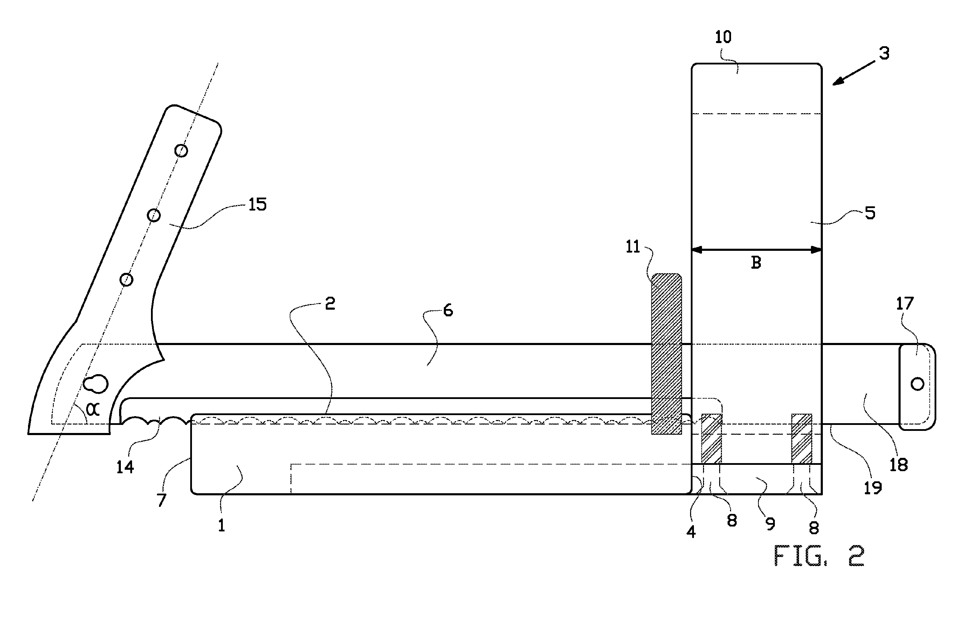

The knife 6 is at its proximate end provided with and handle 15 which is arranged at an angle α with respect to the cutting edge 14 of the knife 6. In the exemplary embodiment shown in figure 2, the handle 14 is arranged at an acute angle with respect to the cutting edge 14, in particular the acute angle is approximately 67 degrees.

At the distal end, the knife 6 is provided with a notch 17 for preventing that the knife 6 is not pulled out of the slot 5. The distal end part 18 of the knife 6 is provided without the lower cutting edge 14. This smooth edge 19 of the knife 6 may prevent an unwanted cutting action by the knife 6 at the side of the guiding member 3 remote from the board 1.

As shown in figures 1 and 2, the guiding member 3 is placed at a distance behind the wall 11. Due to this distance, it is less likely that leftovers or residues of the foodstuff released by the cutting action, such as bread crumbs, reach the guiding member 3 and in particular the slot 5. Placing the guiding member 3 at a distance behind the wall 11 may prevent pollution of the slot 5.

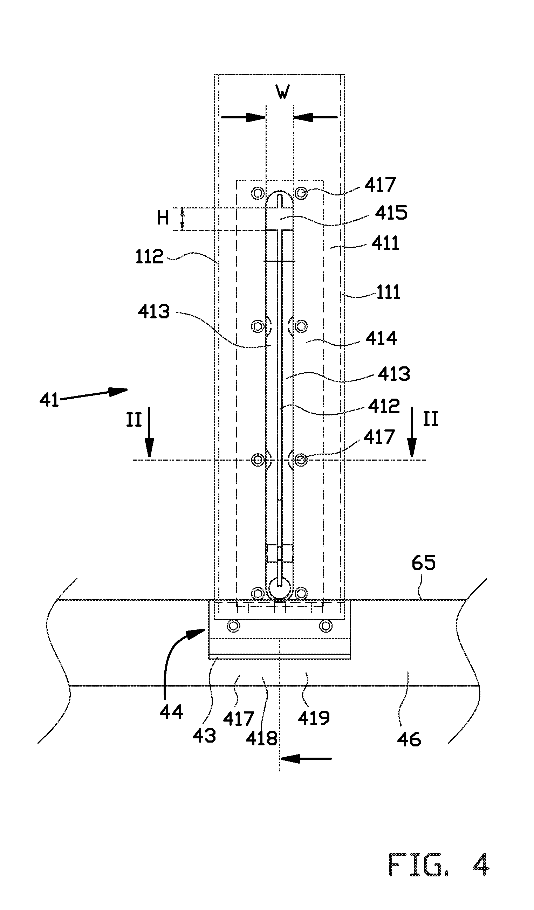

Figure 4 shows an example of an guiding member or upright 41 to guide a knife (not shown) for manually cutting foodstuff, wherein the upright 41 is attached to a worktop 46 which is typically situated in a kitchen like environment. Therefore, such an upright is made from material which withstands often being cleaned, such as stainless steel, aluminum or a thermoplastic material.

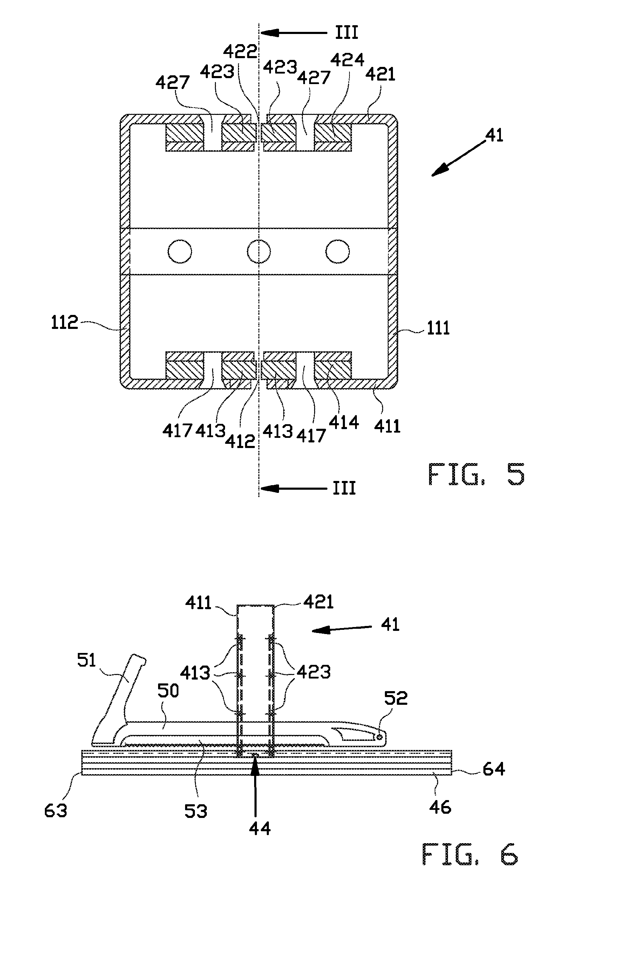

The upright 41 comprises a tubular bar, in this example with a rectangular cross section, which bar comprising a front wall 411, side walls 111,112 and a rear wall (not shown here). The upright 41 however, may be an assembled construction as well comprising a front wall 411, any other side walls 111,112 having a substantial continuous surface and a rear wall. The front 411 of the upright 41 comprises a first slot 412 with a through opening which extends substantially in the length direction of the upright 41. Parallel to the first slot 412, a second slot 422 is located in the rear wall 421, as shown in figure 5. The first slot 412 is in line with the second slot 422 for accommodating and/or guiding the knife running through the first slot 412 and the second slot 422. Since both the upright 41 and a cutting part of the knife are often made from a stainless steel, the first slot 412 and the second slot 422 are provided with a guiding body 413, 423. In this example, a first guiding body 413 is fixed to the front 411, at the inner side of the upright 41 providing that the first slot 412 becomes narrower. The guiding body 413 is typically made from a material such as polyoxymethylene (POM) which is suitable to guide a knife for manually cutting foodstuff. In this example, the guiding body 413 are incorporated within a plate 414 which substantially extends in the length direction of the upright 41, and which is in this example attached to the rear side of the front 411 with bolts 417, in particular inside the upright 41, wherein the plate 414 at least partly overlaps the first slot 412 of the upright 41.

In this example, in the top of the first slot 412, the first slot 412 comprises a slot part 415 having a wider width extending over a certain length H of the first slot 412 in the length direction of the upright 41 and over a certain width W of the slot in a direction transverse to the length direction of the upright 41. The slot part 415 is arranged to allow the passing of a projection or notch 52 at the distal end of the knife 5, situated at a side opposite the handle side of a knife which will be described with reference to figure 6.

The upright 41 according to figure 4 is coupled with the worktop 46 via a support element 44. An upper side 65 of the worktop 46 therefore comprises a slot 43 for accommodating the support element 44 which is inserted in the slot 43 in such a manner that the support element 44 abuttingly fits in the slot 43 of the worktop 46.

Figure 5 shows both the front 411 and the side walls 111,112 according to the description of figure 4 and the rear 421 of the upright 41. The second slot 422 is provided with a second guiding body 423. This second guiding body 423 comprises a plate 424 and is connected to the rear 421 by means of bolts 427. The rear 421 is remote from the front 411 is such a manner as to provide a knife being laterally guided by substantially two guiding bodies 413, 423 which contributes to a straight and stable reciprocating motion of a knife running through the first slot 412 and the second slot 422. The distance between the first slot 412 and the second slot 422 is particularly larger than the width of the first slot 412 and the second slot 422. In order to provide an upright for guiding a knife substantially parallel to the worktop 46 and perpendicular to the front 411 of the upright 41, the first slot 412 is arranged in line with the second slot 422.

Figure 6 shows a knife 50 run through the upright 41 which is coupled with the worktop 46 via support element 44. The guiding bodies 413, 423 substantially extend in the length direction of the upright 41, however, each guiding body 413, 423 may comprise a series of smaller guiding bodies extending along the length direction of the upright 41.

The knife 50 comprises a handle 51 and a projection 52 situated opposite the handle side of the knife 50, and a blade 53 situated between the handle 51 and the projection 52. The projection 52 can be of any shape being able to pass through the upper part 415 of the slot 412, but is preferably cylindrically extending perpendicularly to a plane of a blade 53 of the knife 50.

During the reciprocating motion of the knife 50, the foodstuff is placed between the handle end side 51 of the knife 50 and the front 411 of the upright 41, the projection 52 prevents the knife 50 from inadvertently escaping the second slot 422 since the projection 52 will collide with a rear part of the guiding body 423. The knife 50 can be taken out from the upright 1 by firstly lifting the knife 50 to its upper position wherein the projection 52 of the knife 50 is positioned behind the upper part 415 of the first and second slot. Subsequently, the knife 50 can be retracted from the upright 41, whereby the projection 52 passes through the upper parts 415 of the first slot 412 and the second slot 422. Apart from the knife 50 described above, each simple, common knife suitable for cutting foodstuff can also be used for running through the first slot 412, however such a knife is able to inadvertently escaping the second slot 422 and the first slot 412 as well.

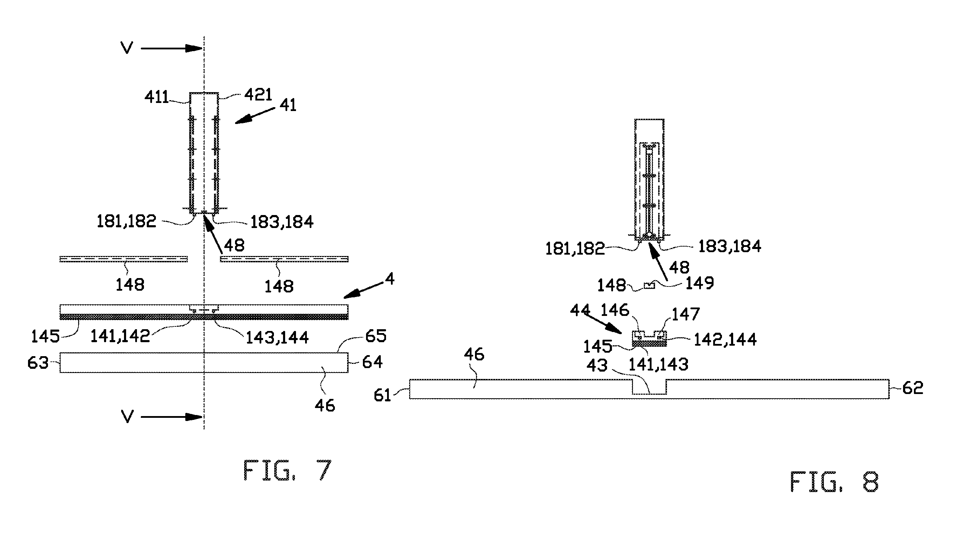

Figures 7 and 8 show similar parts as in figure 6, however, the knife 50 is being retracted and the remaining parts are depicted in an exploded view. The lowest part of the assembly according to figure 6 is the worktop 46 comprising a slot 43 (not shown in figure 7) located between a first side 61 of the worktop 46 and a second side 62 situated opposite the first side 61 of the worktop 46. The slot 43 extends, in this example, from a third end 63 of the worktop 46 towards a fourth end 64 situated opposite the third end 63 of the worktop 6. The slot 43 forms a recess for accommodating and supporting support element 44 into the worktop 46.

Support element 44 comprises a profile preferably made from aluminum, a bottom part 145 and filler elements 146, 147 for accommodating and lateral supporting the insert fillers 148, 149 which are preferably made from a plastic. The insert filler 148 is to be inserted into the profile between the third side 63 of the worktop 46 and the front 411 of the upright 41 and the insert filler 149 is to be inserted into the profile between the rear 421 of the upright 41 and the fourth side 64 of the worktop 46.

At the bottom side of the upright 41, the upright 41 comprises first coupling means 48 to couple the upright 41 with a worktop 46 via the support element 44. In this example, the upright 41 comprises therefore at the front 411 end side coupling pins 181, 182 and at the rear 421 end side coupling pins 183, 184.

To couple the upright 41 with the support element 44, the coupling pins 181, 182, 183, 184 are suitable to engage with matching coupling slots 141, 142, 143, 144 respectively, at least a part of these coupling slots 141, 142, 143, 144 comprising the properties of a bayonet locking type comprising a resilient portion biasing the pins within their slots.

To couple the upright 41 with the support element 44, the pins 181, 182, 183, 184 need to be pushed into a first pushing direction, the pins being pushed into a first part of the coupling slots 141, 142, 143, 144 of the support element 44. When the pins 181, 182, 183, 184 have met with the end of the first part of the slots 141, 142, 143, 144, the upright 41 needs to be moved in a second pushing direction, in this example substantially transverse to the first pushing direction, until pins 181, 182, 183, 184 have met with the end of the second part of the slots 141, 142, 143, 144. Biasing portions hold and lock the pins in these positions in order to prevent them from being backed out. In an alternative embodiment the second pushing direction may also be a rotation of the upright 41 around its length axis.

To uncouple the upright 41 from the support element 44, the above described method is reversed. After having uncoupled the upright 41 from the support element 44, the upright 41 can be cleaned up by removing it from the worktop 46 to provide accommodating the area where the upright was installed to other, kitchen like, activities. When the upright 41 is removed, it can be cleaned and stored in a kitchen like cabinet comprising more stored articles. It is noted that the bayonet type of connecting the upright 41 with the worktop 46, can also be used for connecting the guiding member 3 with the board 1 of figures 1, 2 and 3.

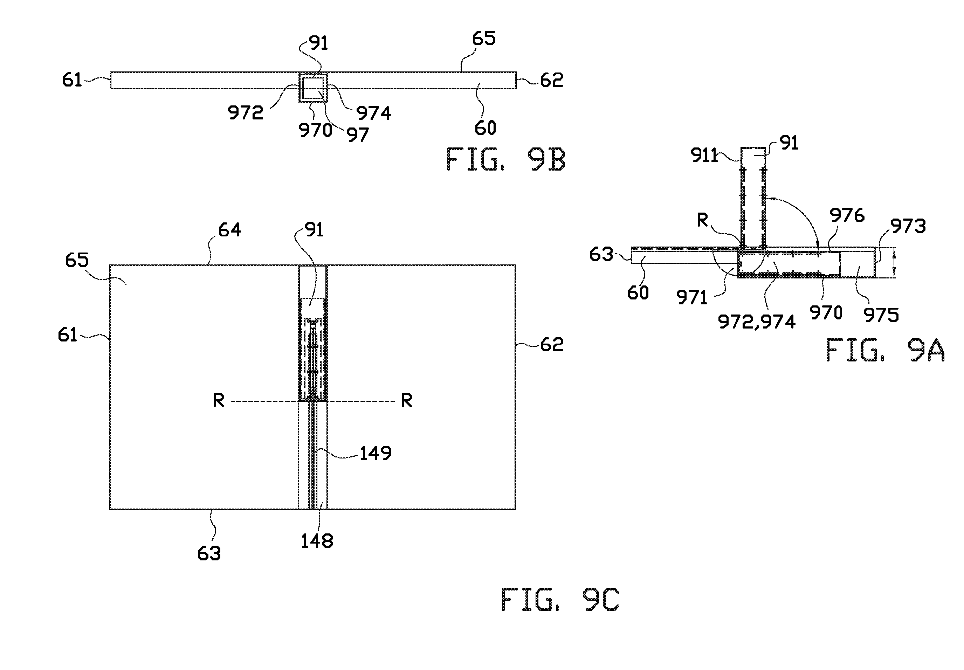

Figure 9A, 9B and 9C show a further exemplary embodiment of the upright 91 that can be stored in a recess 97 accommodating the upright in a stored position. The recess 97 comprises a bottom wall 970, a front wall 971, a first side wall 972, a rear wall 973 and a second side wall 974, these walls 970, 971, 972, 973, 974 forming a box 975 which is open at the top side 976. The surface through the top side 976 of the box 975 is substantially parallel with and situated just below the upper side 65 of the worktop 60.

Figure 6A and 6C show a centerline R which is situated at or near but parallel to an intersection line arising from a plane through the front wall 911 of the upright 91 intersecting with the upper plane 65 of the worktop 60. In order to rotate the upright 91 around centerline R from a first position, wherein the upright 91 is installed to guide a knife for cutting the foodstuff, to the second position, wherein the upright 91 is in a stored position, the upright 91 is, in this example, provided with hinging means (not shown) for which hinging said upright 91 around the centerline R. Thus, the hinging means of the upright 91 is located at or near an intersection line of the plane through the bottom side of the upright 91 and the plane through the front 911 of the upright, so that the intersection line substantially coincides with the centerline R.

Accordingly, the upright 91 can also be stored when not in use by moving it, in this example by a rotation around centerline R, from the worktop 60 into the box 975. After the upright 91 is in a second position wherein it is stored in the box 975, the box 975 which is open at the top side 976 may be covered by a plate such that the area of the worktop 60 with the plate can be used for other, kitchen like, activities.

In the upright position of the upright 91, as shown in figure 9a, the worktop 65 is provided with a filler 148 comprising a groove 149, which is also substantially arranged in the same plane as the slot of the upright 91. The groove 149 can accommodate the cutting edge of the knife, such that the cutting edge can reach below the supporting surface 65 of the worktop in order to fully cut the foodstuff.

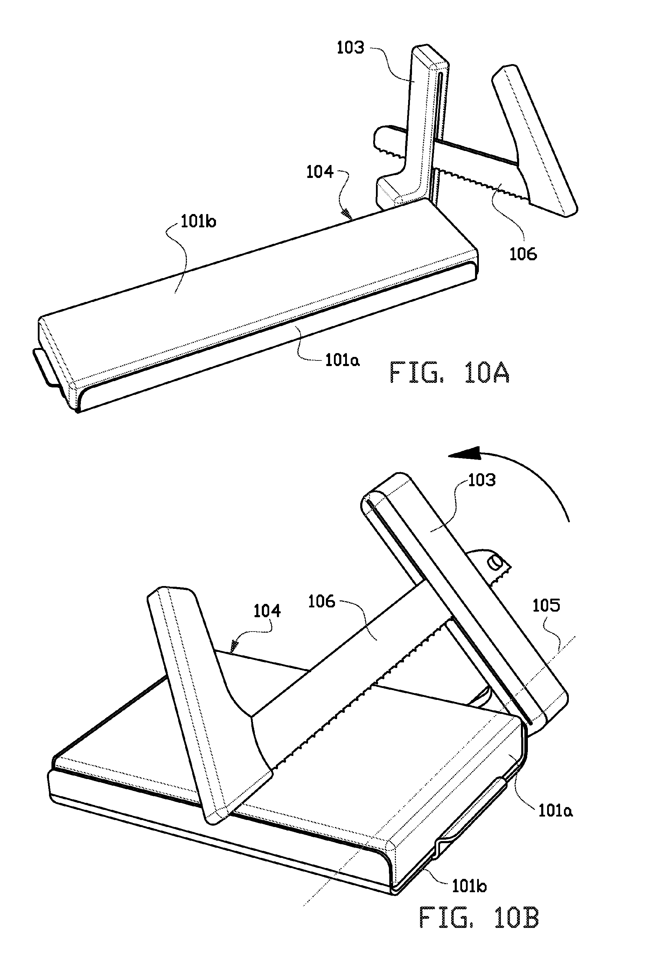

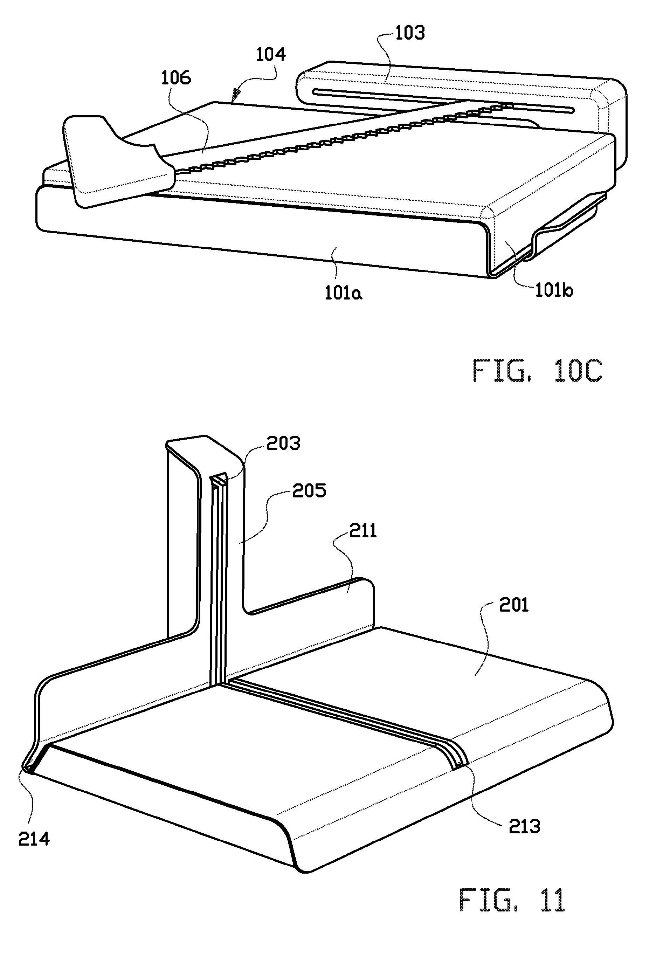

Figures 10A, 10B and 10C show a further exemplary embodiment of the invention, where the guiding member or upright 103 is hingedly attached to the first edge 104 of a holder 101a for holding a cutting board 101b. Figure 10A shows the assembly ready for cutting foodstuff. However, when the assembly is not in use or needs to be stored, the upright 103 is collapsible by rotation around an axis 105 substantially parallel to the cutting direction as shown in figure 10B, to a collapsed position as shown in figure 10C. In this collapsed position, the upright 103 lies parallel along the first edge 104, and the knife 106 lies flat on or above the top surface of the cutting board 101b.

Figure 11 shows a further exemplary embodiment of an assembly according to the invention. In this embodiment, the wall 211 and the upright or guiding member 203 are formed as one unity. The front side of the slot 205 is arranged substantially in the plane of the wall 211. Furthermore, the board 201 is provided with a groove 213, which is also substantially arranged in the same plane as the slot 205. The groove 213 can accommodate the cutting edge of the knife as explained above.

In this embodiment, the board 201 is provided with a further groove 214 in front of the wall 211. The further groove 214 is arranged to collect leftovers or residues of the foodstuff released by the cutting action, such as bread crumbs. Due to this further groove 214 it is substantially prevented that residues of the cutting reach the slot 205, and thus may substantially prevent pollution of the slot 205.

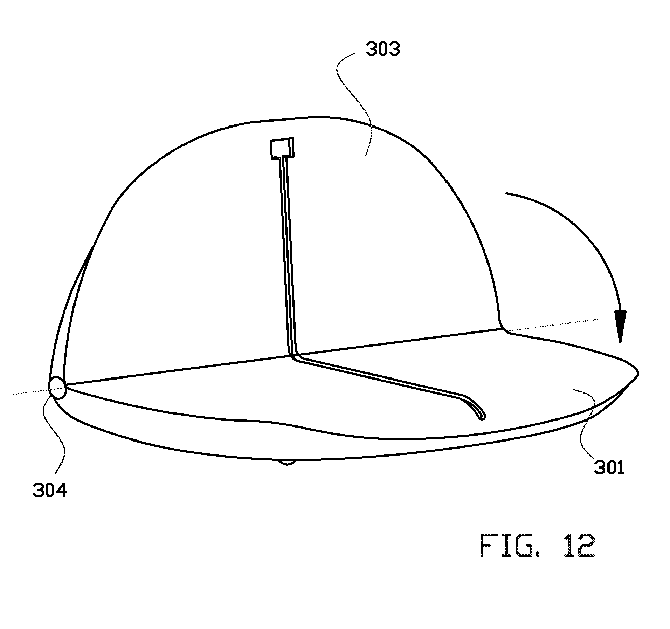

Figure 12 shows an exemplary embodiment of an assembly according to the invention where the upright 303 stretches along the whole length of the first edge 304 for providing the slot 305 for guiding a knife, as well as providing a wall for placing the foodstuff against during the cutting action. The upright 303 is hingedly attached to the cutting board 301 for rotation of the upright 303 around an axis substantially parallel to the first side 304. When not in use, the upright may be rotated to collapse on top of the cutting board 301.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Assembly for manually cutting of foodstuff comprising:
a board for providing a surface for supporting said foodstuff,
a knife for cutting the foodstuff, and
a single upright comprising a slot for guiding the knife, wherein the upright is positioned at or near a first edge of the board, wherein the slot extends substantially perpendicular to the first edge and to the surface of the board, for guiding a to and fro movement of the knife in a direction perpendicular to the first edge,
wherein the knife is arranged to extend over the board, wherein only a part of the knife at or near the distal end of the knife is guided by the slot, and wherein the proximal end of the knife is provided with a handle.

2. Assembly according to claim 1, **characterized in that** the upright comprises a front and a rear, wherein the rear is spaced apart from the front in a direction substantially perpendicular to the first side or edge, wherein the slot is a first slot provided in the front, wherein the rear is provided with a second slot respectively, both first and second slots providing a through-opening, wherein the second slot is substantially parallel to the first slot for accommodating and/or guiding the knife running through the first slot and the second slot.

3. Assembly according to claim 1, **characterized in that** the upright comprises a front and a rear, wherein the rear spaced apart from the front in a direction substantially perpendicular to the first side or edge, wherein the slot is a first slot provided in a first guiding body which is attached to or near the front, wherein a second guiding body which is provided with a second slot is attached to or near the rear respectively, both first and second slots providing a through-opening, wherein the second slot is substantially parallel to the first slot for accommodating and/or guiding the knife running through the first slot and the second slot.

4. Assembly according to claim 3, **characterized in that** the first and second guiding bodies are made from a polymer material, and/or wherein the first and second guiding bodies are made from a low friction material, and/or wherein the guiding bodies are removable arranged to or near the front and rear.

5. Assembly according to claims 2, 3 or 4, **characterized in that** the front, the rear are interconnected by side walls to form a tube with a longitudinal axis, wherein the first and second slot are substantially parallel to the longitudinal axis of said tube.

6. Assembly according to any one of the previous claims, **characterized in that** the slot is arranged substantially at or near the centre of the first edge of the board.

7. Assembly according to any one of the previous claims, **characterized in that** a distal end of the knife is provided with a notch or projection which projects out of a blade of the knife, wherein a width of the slot is smaller than the projection, and wherein the slot comprises a slot part having a larger width than the projection to allow the projection to pass through, preferably wherein the slot part is arranged at or near a side of the slot facing away from the board.

8. Assembly according to any one of the previous claims, **characterized in that** the board is provided with a wall at or near the first edge for placing the foodstuff against, wherein the wall extends in the length direction of the first edge and is provided with a trough-opening for the knife.

9. Assembly according to claim 8, **characterized in that** the wall and the upright are formed as one single piece, preferably wherein the board is provided with a groove along the wall at a side of the wall facing away from said first edge, for collecting residues of the foodstuff released by a cutting action.

10. Assembly according to claim 8, **characterized in that** the upright is arranged at a side of the wall remote from a surface of the wall for placing the foodstuff against, preferably the upright is arranged at a distance from said wall.

11. Assembly according to any one of the previous claims, **characterized in that** the upright is hingedly attached to the board.

12. Assembly according to any one of the claims 1 - 10, **characterized in that** the upright is removable connected to the board, preferably wherein the upright and the board are connected by a bayonet or quick release connection.

13. Upright for us in an assembly according to any one of the previous claims.

14. Upright for guiding a knife for manually cutting of foodstuff comprising:
a front and a rear, wherein the rear is spaced apart from the front,
side walls interconnecting the front and rear,
wherein the front is provided with a first slot, wherein the rear is provided with a second slot respectively, both first and second slots providing a through-opening for the knife, wherein the second slot is substantially parallel to the first slot for accommodating and/or guiding the knife running through the first slot and the second slot, and
wherein the upright is provided with a coupling member for connecting the upright to a board or a worktop.

15. Upright according to claim 14, further provided with the characterizing part of any one of the claims 3 - 12.
